# EUROPEAN PATENT SPECIFICATION

(11) **EP 4 540 049 B1**
(45) Date of publication and mention of the grant of the patent: **28.01.2026**
(21) Application number: 23728839.4
(22) Date of filing: 12.06.2023
(51) Int. Cl.: B29C 64/118, B29C 64/209, B33Y 70/00, B33Y 10/00, B33Y 30/00, D01D 5/253

(54) **A FILAMENT FOR USE IN A FUSED DEPOSITION MODELLING 3D MANUFACTURING METHOD**
EIN FILAMENT ZUR VERWENDUNG IN EINEM 3D-HERSTELLUNGSVERFAHREN DURCH SCHMELZSCHICHTUNGSVERFAHEN
FILAMENT POUR UTILISATION DANS UNE MÉTHODE DE FABRICATION 3D PAR DÉPÔT DE MATIÈRE FONDUE

(30) Priority: 16.06.2022 EP 22179357
(43) Date of publication of application: 23.04.2025
(73) Proprietor: Signify Holding B.V., 5656 AE Eindhoven (NL)
(72) Inventor: HIKMET, Rifat, Ata, Mustafa, 5656 AE Eindhoven (NL); VAN BOMMEL, Ties, 5656 AE Eindhoven (NL)
(74) Representative: Verweij, Petronella Daniëlle
(86) International application number: PCT/EP2023/065643
(87) International publication number: WO 2023/242117

(56) References cited:
- US-B2- 10 589 458
- US-B2- 11 001 945

## Description

### FIELD OF THE INVENTION

The invention relates to a filament for use in a method of manufacturing a 3D item by means of fused deposition modelling using a 3D printer. The invention also relates to a method that uses the filament, and to a 3D printer for performing the method.

### BACKGROUND OF THE INVENTION

A 3D printing process is a process wherein a material is joined or solidified under computer control to create a three-dimensional object of almost any shape or geometry. Such three-dimensional objects are typically produced using data from a three-dimensional model, and usually by successively adding material layer by layer.

An example of a 3D printing process is fused deposition modeling (FDM), which is also called fused filament fabrication (FFF) or filament 3D printing (FDP). FDM is one of the most commonly used forms of 3D printing. In an FDM process, a 3D printer creates an object in a layer-by-layer manner by extruding a printable material (typically a filament of a thermoplastic material) along tool paths that are generated from a digital representation of the object. The printable material is heated just beyond solidification and extruded through a nozzle of a print head of the 3D printer. The extruded printable material fuses to previously deposited material and solidifies upon a reduction in temperature. In a typical 3D printer, the printable material is deposited as a sequence of planar layers onto a substrate that defines a building platform. The position of the print head relative to the substrate is then incremented along a print axis (perpendicular to the building platform), and the process is repeated until the object is complete.

FDM printers are relatively fast, low cost and can be used for printing complicated three-dimensional objects. Such printers are used in printing various shapes using various 3D printable materials.

Most filaments used in FDM are hygroscopic, which means that they can absorb moisture from the air. Materials such as acrylonitrile butadiene styrene (ABS), polyamides (for example Nylon), polycarbonate (PC), polyesters (for example polyethylene terephthalate (PET) and polyethylene terephthalate glycol (PETG)), poly(vinyl alcohol) (PVA), and thermoplastic polyurethane (TPU), are most likely to absorb moisture from air. To a lesser extent this is also the case for materials such as polylactic acid (PLA), acrylonitrile styrene acrylate (ASA) and polypropylene (PP).

Absorption of water by the filaments can affect the quality of the printed object. For example, it may result in the occurrence of bubbles in printed layers, extrusion issues, brittle, soft, and fragile printed parts, and/or poor adhesion to the building platform.

To prevent such issues, and to obtain printed objects that are free of defects and have a good mechanical integrity, it is necessary to use dry filaments. This can be achieved by placing the filament in an oven with a dry atmosphere. Typical oven temperatures are in the range of 40 to 50 degrees Celsius, and typical drying times are in the range of 4 to 6 hours.

US 10589458 B2 discloses a filament for use in a method of manufacturing a 3D item by means of fused deposition modelling using a 3D printer, wherein the filament comprises a thermoplastic material and wherein, perpendicular to the axis of elongation, the filament has a cross section with a concave shape, wherein the filament has a filament center portion and a plurality of filament extensions.

### SUMMARY OF THE INVENTION

Drying a filament is an energy- and time-consuming process, and it is an object of the invention to improve this.

According to a first aspect, the invention provides a filament for use in a method of manufacturing a 3D item by means of fused deposition modelling using a 3D printer, wherein the filament comprises a thermoplastic material. The filament has an axis of elongation, and, perpendicular to the axis of elongation, the filament has a cross section with a concave shape.

According to a second aspect, the invention provides a method of manufacturing a 3D item by means of fused deposition modelling using a 3D printer, wherein the method comprises the step of layer-wise depositing a 3D printable material to provide the 3D item comprising layers of 3D printed material, and wherein the 3D printable material is a filament according to the first aspect.

A concave shape is a shape that has at least one reflex interior angle. In other words, a concave shape has at least one interior angle that is larger than 180 degrees but smaller than 360 degrees. An angle of a shape is called an interior angle (sometimes also an internal angle) if a point within that angle is in the interior of the shape. An example of a concave shape is a polygonal shape, such as a star shape or a cross shape.

Compared to a "standard" filament with a circular cross section, a filament with a concave cross section (and a comparable thickness) has an increased surface area, and consequently a reduced drying time.

An example of a filament with a concave cross section is a filament with a filament center portion and a plurality of filament extensions. The filament center portion has a filament center axis that coincides with the axis of elongation of the filament. Each filament extension has an extension length and extends from the filament center portion in an extension direction perpendicular to the filament center axis.

In the above example, the filament extensions may be regularly distributed around the filament center portion. Furthermore, the filament extensions may be straight or non-straight, such as curved.

In a direction parallel to the extension direction, the filament center portion has a center portion width. The ratio of the extension length and the center portion width may be equal to or larger than 1.

The plurality of filament extensions may comprise a first subset of filament extensions comprising a first material of a first color and a second subset of filament extensions comprising a second material of a second material, wherein the first color is different from the second color.

According to a third aspect, the invention provides a 3D printer for use in the method according to the first aspect. The 3D printer has a printer head with a filament inlet and a filament outlet. The filament inlet is for receiving a filament according to the second aspect, and it has a concave filament inlet shape. The filament outlet has a circular filament outlet shape.

The filament inlet shape may have an inlet center portion and a plurality of inlet extensions. Each inlet extension has an extension length and extends in a direction away from the inlet center portion.

The printer head may have a filament channel for passing a filament according to the second aspect through the printer head from the filament inlet to the filament outlet. The filament channel may be shaped such that when the filament passes through the filament channel, the filament extensions are folded around the filament center portion.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig. 1 shows a 3D printer for performing a method for manufacturing a 3D item by means of fused deposition modelling.
Figs 2(a) to 2(d) show cross sections of a filament for use in a method for manufacturing a 3D item by means of fused deposition modelling.
Figs 3(a) to 3(c) show cross sections of a filament for use in a method for manufacturing a 3D item by means of fused deposition modelling.
Figs 4(a) to 3(c) show cross sections of a filament for use in a method for manufacturing a 3D item by means of fused deposition modelling.

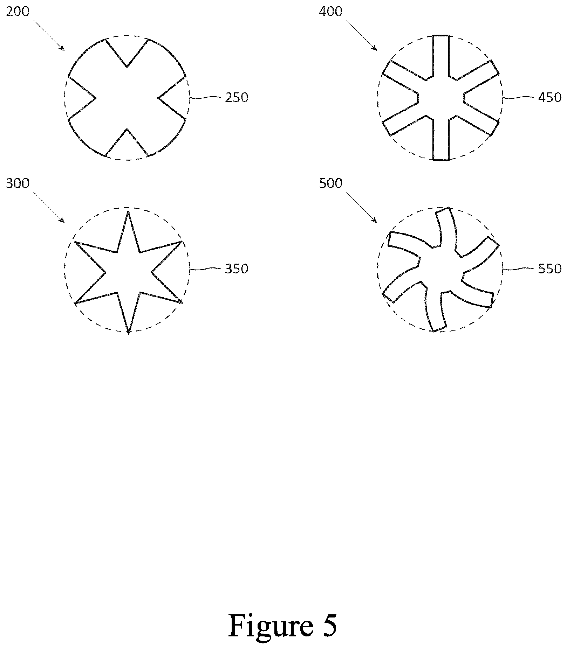

Fig. 5 shows cross sections of a filament for use in a method for manufacturing a 3D item by means of fused deposition modelling.
Fig. 6 shows a cross section of a filament for use in a method for manufacturing a 3D item by means of fused deposition modelling.
Fig. 7 shows a method of manufacturing a filament by joining two or more filament parts together.
Fig. 8 shows a printer head of a 3D printer for performing a method for manufacturing a 3D item by means of fused deposition modelling.
Fig. 9 shows a printer head of a 3D printer for performing a method for manufacturing a 3D item by means of fused deposition modelling.

The drawings are schematic and not necessarily to scale.

### DETAILED DESCRIPTION OF THE EMBODIMENTS

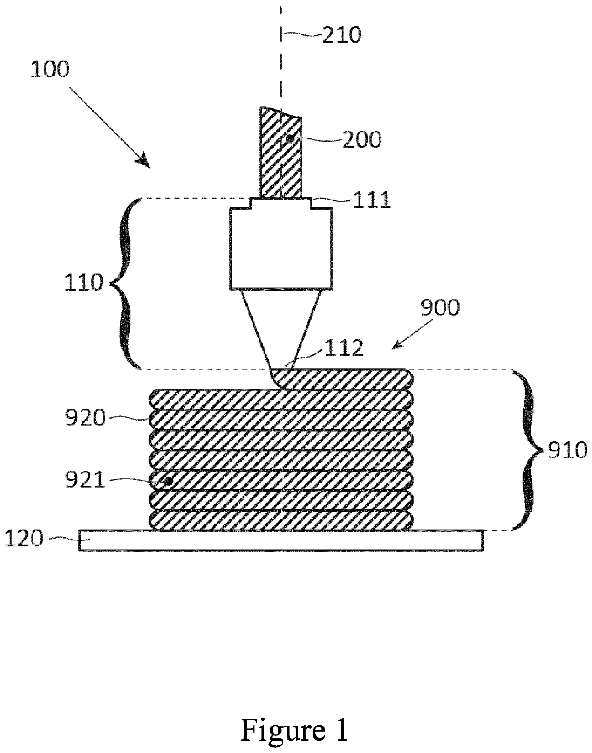

Figure 1 schematically depicts a 3D printer 100 for performing a method for manufacturing a 3D item by means of fused deposition modelling. The 3D printer 100 may also be referred to as an FDM printer.

The 3D printer 100 has a printer head 110 with a filament inlet 111 and a filament outlet 112.

A filament 200 is fed into the printer head 110 via the filament inlet 111. In the printer head 110, the filament 200 is melted and subsequently deposited in a layer-wise manner by the printer head 110 on a building platform 120 to provide a 3D item 900.

The 3D item 900 has a layer stack 910 comprising a plurality of layers 920 of 3D printed material 921.

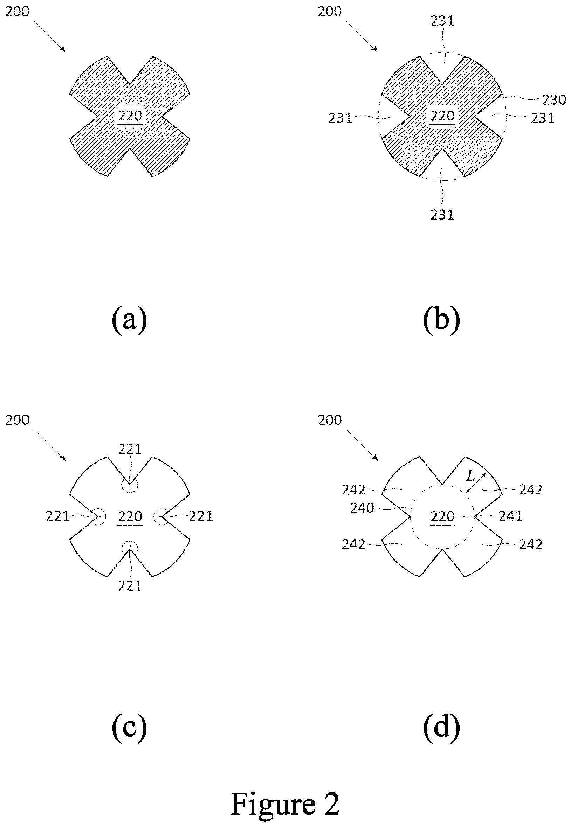

The filament 200 has an axis of elongation 210. In a plane perpendicular to the axis of elongation 210, the filament 200 has a cross section. Figure 2 shows an example of such a cross section.

Figure 2(a) shows cross section 220 of the filament 200. The cross section 220 is in a plane perpendicular to the axis of elongation 210 of the filament 200, and it has the shape of a cross.

As illustrated in Figure 2(b), the filament 200 resembles a cylindrical filament wherein four V-shaped grooves 231 have been cut at regular positions along the perimeter 230 and extending in a direction along the axis of elongation 210.

As illustrated in Figure 2(c), the cross section 220 has four interior angles 221 that are each larger than 180 degrees but smaller than 360 degrees. An angle between 180 degrees and 360 degrees is called a reflex angle. So, the cross section 220 has four reflex interior angles.

When a shape has at least one reflex interior angle, that shape is called a concave shape. The cross section 220 is clearly an example of a concave shape.

Figure 2(d) again shows the same cross section 220 of the filament 200. Now it is indicated that the filament 200 has a filament center portion 241 and four filament extensions 242. The filament center portion 241 is the portion enclosed by the dashed circle 240. It has a filament center axis that coincides with the axis of elongation 210 of the filament 200. Each filament extension 242 has an extension length L and extends from the filament center portion 241 in an extension direction perpendicular to the filament center axis (and hence also perpendicular to the axis of elongation 210).

Compared to a comparable "standard" filament (being a cylindrical filament with comparable thickness, such as indicated by the dashed line 230 in Figure 2(b)), the filament 200 has an increased surface area. Consequently, the filament 200 will have a drying time that is less than that of the comparable "standard" filament (at least when the filaments are made from the same material).

A filament with a reduced drying time is obtained when, compared to a comparable "standard" filament, the filament has an increased surface area. Such an increased surface area can be obtained when, in a plane perpendicular to the axis of elongation of the filament, the filament has a cross section with a concave shape (*i.e.,* with at least one interior reflex angle).

The filament 200 illustrated in Figures 2(a) to 2(d) has a cross section with a concave shape.

As said, the filament 200 has four interior reflex angles. To obtain an increased surface area, and hence a reduced drying time, it suffices to have at least one interior reflex angle, and the one or more interior reflex angles may have any value between 180 degrees and 360 degrees.

As said, the filament 200 resembles a cylindrical filament wherein four V-shaped grooves 231 have been cut at regular positions along the perimeter 230 and extending in a direction along the axis of elongation 210. To obtain an increased surface area, and hence a reduced drying time, any number of grooves may suffice, the grooves may have any shape, the grooves may be distributed in any way along the perimeter, and the grooves may extend in any length along the axis of elongation of the filament.

As said, the filament 200 has a filament center portion 241, with a filament center axis that coincides with the axis of elongation 210 of the filament 200, and four filament extensions 242, each having an extension length L and extending from the filament center portion 241 in an extension direction perpendicular to the filament center axis. To obtain an increased surface area, and hence a reduced drying time, any plurality of filament extensions may be used, and the filament extensions may have any length and form.

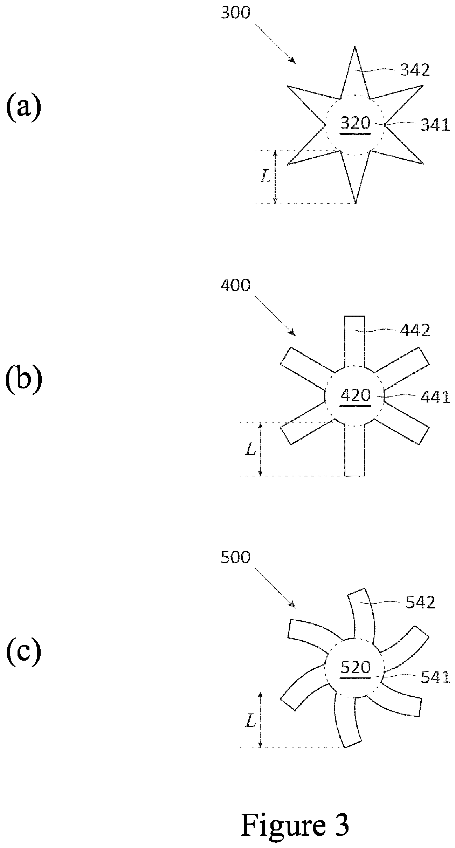

Figure 3(a) shows another example of a filament. Here, the filament 300 has a cross section 320 with a star shape. The cross section 320 has a filament center portion 341, with a filament center axis that coincides with the axis of elongation of the filament 300. The cross section 320 further has six filament extensions 342 distributed regularly around the filament center portion 341. The filament extensions 342 have substantially the same extension length L and they all extend from the filament center portion 341 in an extension direction perpendicular to the filament center axis.

Figure 3(b) shows another example of a filament. Here, the filament 400 has a cross section 320 with a cross shape (actually, the shape of a cross with three intersecting bars). The cross section 420 has a filament center portion 441, with a filament center axis that coincides with the axis of elongation of the filament 400. The cross section 420 further has six filament extensions 442 distributed regularly around the filament center portion 341. The filament extensions 442 have substantially the same extension length L and they all extend from the filament center portion 441 in an extension direction perpendicular to the filament center axis.

In Figures 3(a) and 3(b) the filament extensions 342 and 442, respectively, are all straight extensions. The filament extensions 342 have the shape of a prism with a triangular base, and the filament extensions 442 have the shape of a prism with a rectangular base.

Figure 3(c) shows another example of a filament. The filament 500 is similar to the filament 400 of Figure 3(b), but now, instead of being straight, the filament extensions 542 are curved in the extension direction.

Each filament illustrated in Figures 3(a) to 3(c) has a cross section in a plane perpendicular to the axis of elongation, wherein the cross section has a concave shape. The cross section of each filament has at least one interior reflex angle.

Each filament illustrated in Figures 3(a) to 3(c) has a filament center portion and a plurality of filament extensions, wherein the filament center portion has a filament center axis that coincides with the axis of elongation of the filament, and wherein each filament extension has an extension length and extends from the filament center portion in an extension direction perpendicular to the filament center axis.

Each filament illustrated in Figures 3(a) to 3(c) has filament extensions that are regularly distributed around the filament center portion.

The filament 300 of Figure 3(a) has a cross section with a star shape, and the filament 400 of Figure 3(b) has a cross section with a cross shape. Both shapes are examples of a concave polygonal shape. Next to star shapes and cross shapes, any concave polygonal shape may be used to provide a filament with an increased surface area.

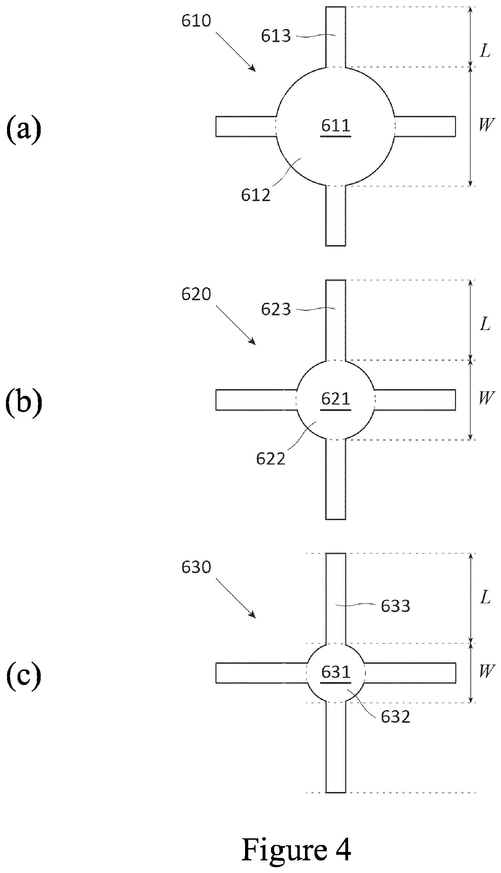

Figures 4(a) to 4(c) show filaments 610, 620 and 630, respectively. The filaments 610, 620 and 630 have cross sections 611, 621 and 631, respectively. Each of these cross sections has a concave shape in the form of a cross, with four filament extensions (613, 623 and 633) extending from and regularly distributed around a filament center portion (612, 622 and 632).

Each filament extension 613, 623 and 633 extends from the respective filament center portion 612, 622 and 632 in an extension direction perpendicular to a center axis of the filament center portion. Each filament extension 613, 623 and 633 has an extension length *L,* and each filament center portions 612, 622 and 632 has a center portion width *W* in a direction parallel to the extension direction.

In Figure 4(a), the ratio of the extension length *L* and the center portion width *W* (*L*/*W*) is smaller than 1 (in other words, *W* is larger than *L*)*.* In Figure 4(b), the ratio of the extension length *L* and the center portion width *W* (*L*/*W*) is equal to 1 (in other words, *W* is equal to *L*). In Figure 4(c), the ratio of the extension length *L* and the center portion width *W* (*L*/*W*) is larger than 1 (in other words, *W* is smaller than *L*)*.* The larger the ratio of the extension length *L* and the center portion width *W,* the larger the surface area of the filament, and hence the shorter the drying time.

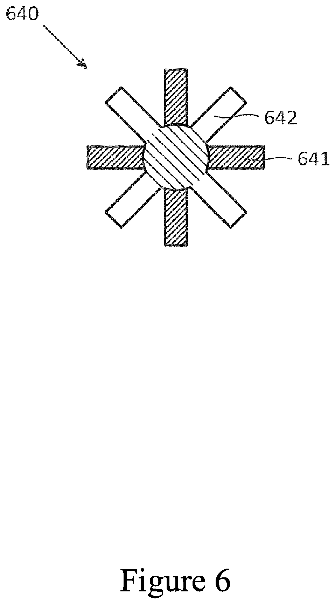

Any concave shape has a smallest bounding circle. This is the circle with the smallest diameter that fully encloses the concave shape. Figure 6 shows, for filaments 200, 300, 400 and 500, their respective smallest bounding circles 250, 350, 450 and 550. The smallest bounding circle may have a diameter in the range of 1 mm to 5 mm, such as in the range of 1 mm to 3 mm, for example 1.75 mm or 2.85 mm, the latter two being diameters of typical "standard" cylindrical filaments used in FDM.

Each of the filaments 200, 300, 400, 500, 610, 620 and 630 has a concave cross section with a rotational symmetry of order n. The aforementioned filaments all have a filament center portion (with a filament center axis that coincides with the axis of elongation of the filament) and a plurality of identical filament extensions, each extending from the filament center portion in an extension direction perpendicular to the center axis.

For the purpose of the invention, the order n may have any value. In fact, the cross section may even be asymmetric, as long as it has a concave shape.

When the filament has a plurality of filament extensions extending from a filament center portion, the lengths of the filament extensions may be equal, but they may also be different.

The filament extensions may be distributed at regular intervals around the filament center portion, but they may also be distributed randomly around the filament center portion.

The filament extensions extend from the filament center portion in an extension direction. Perpendicular to the extension direction, the filament extensions have a filament extension thickness.

In the extension direction, the filament extensions may be straight or non-straight, such as curved, bent, crooked, twisted, and kinked.

The filament extensions may have a constant filament extension thickness or a non-constant filament extension thickness, such as a filament extension thickness that decreases along the extension direction, either linearly or non-linearly.

Figure 6 shows filament 640, which has a plurality of filament extensions that comprises a first subset of filament extensions 641 and a second subset of filament extensions 642. The first subset of filament extensions 641 comprises a first material of a first color, and the second subset of filament extensions 642 comprises a second material of a second color. The first color is different from the second color.

Besides color, a first subset of filament extensions may be different from a second subset of filament extensions in any optical property, such as transmissivity, reflectivity, and diffusivity.

A filament having a cross section with a concave shape perpendicular to its axis of elongation, such as each of the filaments 200, 300, 400, 500, 610, 620, 630 and 640, can be made by means of injection molding.

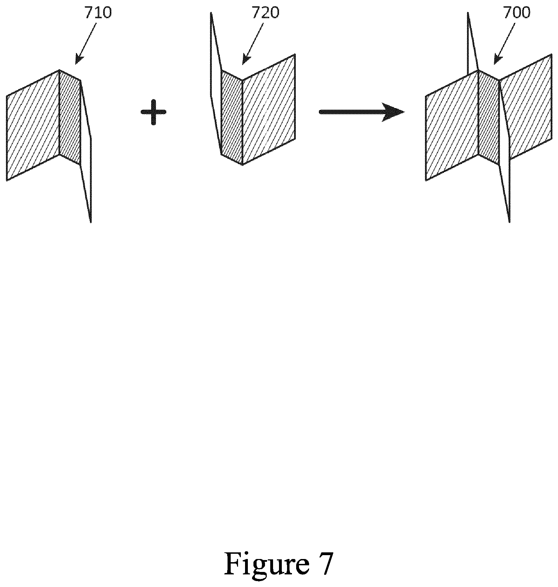

Alternatively, such a filament can be made by joining two or more filament parts together. This is illustrated in Figure 7. Filament 700 is formed by joining first filament part 710 and second filament part 720. Each of the first filament part 710 and the second filament part 720 has a V-shaped cross section perpendicular to its axis of elongation. After being joined together, the first filament part 710 and the second filament part 720 constitute filament 700, having an X-shaped cross section perpendicular to its axis of elongation. Each of the first filament part 710 and the second filament part 720 can be formed by folding a strip of material.

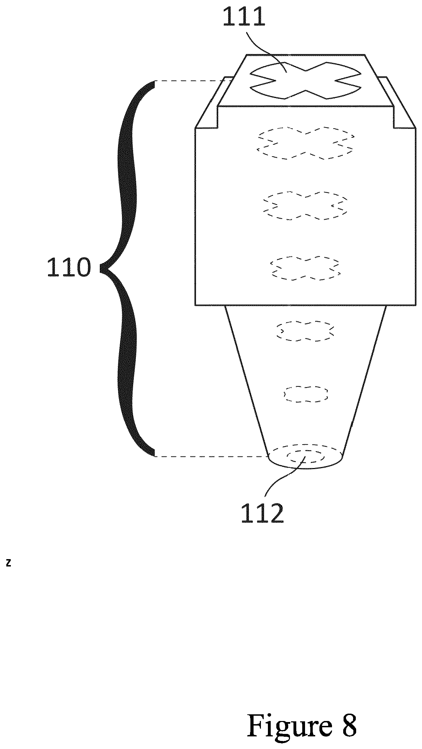

Figure 8 again shows the printer head 110 that was already shown in Figure 1. The printer head 110 is part of a 3D printer, and it has filament inlet 111 and filament outlet 112. The filament inlet 111 is for receiving a filament, such as filament 200 shown in Figures 2(a) to 2(d).

The filament inlet 111 has a shape that is conformal to the cross section of the filament 200. In other words, the filament inlet 111 has a concave filament inlet shape. More specifically, the filament inlet 111 has a filament inlet shape with an inlet center portion and a plurality of inlet extensions, wherein each inlet extension has an extension length, and wherein each inlet extension extends in a direction away from the inlet center portion.

The filament outlet 112 has a circular filament outlet shape.

The printer head 110 has a filament channel for passing a filament through the printer head 110 from the filament inlet 111 to the filament outlet 112. In other words, the filament inlet 111 and the filament outlet 112 are opposing ends of the filament channel. The dashed shapes drawn in between the filament inlet 111 and the filament outlet 112 indicate different cross sections of the filament channel, thereby showing that the cross section of the filament channel gradually changes from the shape of the filament inlet 111 into that of the filament outlet 112.

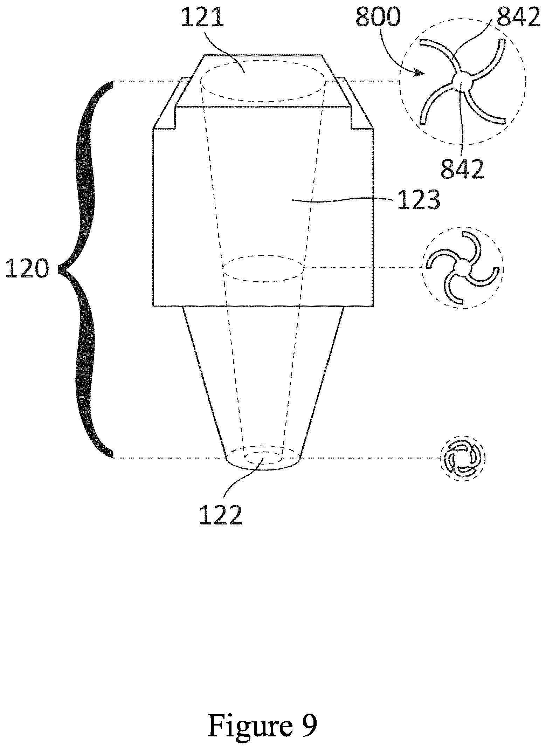

Figure 9 shows printer head 120, having filament inlet 121 and filament outlet 122 as opposing ends of filament channel 123. Here, the filament channel 123 is shaped such that, when a filament such as filament 800 passes through the filament channel 123, the filament extensions 842 are folded around the filament center portion 841.

When the filament has a plurality of filament extensions extending from a filament center portion, especially when the filament extensions are flexible and/or curved, a tapered filament channel may result in the filament extensions being folded around the filament center portion.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The various aspects discussed in this patent can be combined in order to provide additional advantages. Further, the person skilled in the art will understand that embodiments can be combined, and that also more than two embodiments can be combined.

## Claims

1. A filament (640) for use in a method of manufacturing a 3D item (910) by means of fused deposition modelling using a 3D printer (100), wherein the filament (640) comprises a thermoplastic material, wherein the filament (640) has an axis of elongation (210), wherein, perpendicular to the axis of elongation (210), the filament (640) has a cross section (220) with a concave shape, wherein the filament (640) has a filament center portion (241) and a plurality of filament extensions (242), the filament center portion (241) having a filament center axis that coincides with the axis of elongation (210), wherein each filament extension (242) has an extension length and extends from the filament center portion (241) in an extension direction perpendicular to the filament center axis, **characterised in that** the plurality of filament extensions comprises a first subset of filament extensions (641) comprising a first material of a first color and a second subset of filament extensions (642) comprising a second material of a second color, and wherein the first color is different from the second color.

2. The filament (640) according to claim 1, wherein the filament extensions (242) are regularly distributed around the filament center portion (241).

3. The filament (640) according to any one of claims 1 and 2, wherein the filament extensions (242) are straight.

4. The filament (640) according to any one of claims 1 to 3, wherein the filament center portion (241) has a center portion width in a direction parallel to the extension direction, and wherein the ratio of the extension length and the center portion width is equal to or larger than 1.

5. The filament (640) according to any one of claims 1 to 4, wherein the concave shape is a polygonal shape.

6. The filament (640) according to claim 5, wherein the polygonal shape is a star shape or a cross shape.

7. A method of manufacturing a 3D item (910) by means of fused deposition modelling using a 3D printer (100), wherein the method comprises the step of layer-wise depositing a 3D printable material to provide the 3D item (910) comprising layers (920) of 3D printed material (921), and wherein the 3D printable material is a filament (640) according to any one of claims 1 to 6.

8. A 3D printer (100) for performing the method according to claim 7, wherein the 3D printer (100) has a printer head (110) with a filament inlet (111) and a filament outlet (112), the filament inlet (111) being for receiving a filament (640) according to any one of claims 1 to 6, wherein the filament inlet (111) has a concave filament inlet shape with an inlet center portion and a plurality of inlet extensions, each inlet extension having an extension length and extending in a direction away from the inlet center portion, and wherein the filament outlet (112) has a circular filament outlet shape.

9. The 3D printer (100) according to claim 8, wherein the printer head (110) has a filament channel (123) for passing a filament (800) according to any one of claims 1 to 6 through the printer head (110) from the filament inlet (111) to the filament outlet (122), and wherein the filament channel (123) is shaped such that when the filament (800) passes through the filament channel (123), the filament extensions (842) are folded around the filament center portion (841).

## Patentansprüche

1. Filament (640) zur Verwendung in einem Verfahren zum Herstellen eines 3D-Gegenstands (910) mittels Schmelzschichtung unter Verwendung eines 3D-Druckers (100), wobei das Filament (640) ein thermoplastisches Material umfasst, wobei das Filament (640) eine Dehnungsachse (210) aufweist, wobei, senkrecht zu der Dehnungsachse (210), das Filament (640) einen Querschnitt (220) mit einer konkaven Form aufweist, wobei das Filament (640) einen Filament-Mittelabschnitt (241) und eine Vielzahl von Filament-Erweiterungen (242) aufweist, wobei der Filament-Mittelabschnitt (241) eine Filament-Mittelachse, die mit der Dehnungsachse (210) zusammenfällt, aufweist, wobei jede Filament-Erweiterung (242) eine Erweiterungslänge aufweist und sich von dem Filament-Mittelabschnitt (241) in einer Erweiterungsrichtung senkrecht zu der Filament-Mittelachse erstreckt,
**dadurch gekennzeichnet, dass** die Vielzahl von Filament-Erweiterungen eine erste Teilmenge von Filament-Erweiterungen (641), umfassend ein erstes Material einer ersten Farbe, und eine zweite Teilmenge von Filament-Erweiterungen (642), umfassend ein zweites Material einer zweiten Farbe, umfasst, und wobei sich die erste Farbe von der zweiten Farbe unterscheidet.

2. Filament (640) nach Anspruch 1, wobei die Filament-Erweiterungen (242) um den Filament-Mittelabschnitt (241) regelmäßig verteilt sind.

3. Filament (640) nach einem der Ansprüche 1 und 2, wobei die Filament-Erweiterungen (242) gerade sind.

4. Filament (640) nach einem der Ansprüche 1 bis 3, wobei der Filament-Mittelabschnitt (241) eine Mittelabschnittsbreite in einer Richtung parallel zu der Erweiterungsrichtung aufweist, und wobei das Verhältnis der Erweiterungslänge und der Mittelabschnittsbreite gleich oder größer als 1 ist.

5. Filament (640) nach einem der Ansprüche 1 bis 4, wobei die konkave Form eine polygonale Form ist.

6. Filament (640) nach Anspruch 5, wobei die polygonale Form eine Sternform oder eine Kreuzform ist.

7. Verfahren zum Herstellen eines 3D-Gegenstands (910) mittels Schmelzschichtung unter Verwendung eines 3D-Druckers (100), wobei das Verfahren den Schritt des schichtweisen Abscheidens eines 3D-druckbaren Materials umfasst, um den 3D-Gegenstand (910) bereitzustellen, umfassend Schichten (920) aus 3D-gedrucktem Material (921), und wobei das 3D-druckbare Material ein Filament (640) nach einem der Ansprüche 1 bis 6 ist.

8. 3D-Drucker (100) zum Durchführen des Verfahrens nach Anspruch 7, wobei der 3D-Drucker (100) einen Druckerkopf (110) mit einem Filamenteinlass (111) und einem Filamentauslass (112) aufweist, wobei der Filamenteinlass (111) zum Aufnehmen eines Filaments (640) nach einem der Ansprüche 1 bis 6 dient, wobei der Filamenteinlass (111) eine konkave Filamenteinlassform mit einem Einlassmittelabschnitt und einer Vielzahl von Einlasserweiterungen aufweist, wobei jede Einlasserweiterung eine Erweiterungslänge aufweist und sich in eine Richtung weg von dem Einlassmittelabschnitt erstreckt, und wobei der Filamentauslass (112) eine kreisförmige Filamentauslassform aufweist.

9. 3D-Drucker (100) nach Anspruch 8, wobei der Druckerkopf (110) einen Filamentkanal (123) zum Durchführen eines Filaments (800) nach einem der Ansprüche 1 bis 6 durch den Druckerkopf (110) von dem Filamenteinlass (111) zu dem Filamentauslass (122) aufweist, und wobei der Filamentkanal (123) derart geformt ist, dass, wenn das Filament (800) durch den Filamentkanal (123) hindurchgeht, die Filament-Erweiterungen (842) um den Filament-Mittelabschnitt (841) gefaltet werden.

## Revendications

1. Filament (640) destiné à être utilisé dans un procédé de fabrication d'un objet 3D (910) au moyen d'une modélisation par dépôt en fusion à l'aide d'une imprimante 3D (100), dans lequel le filament (640) comprend un matériau thermoplastique, dans lequel le filament (640) a un axe d'allongement (210), dans lequel, perpendiculaire à l'axe d'allongement (210), le filament (640) a une section transversale (220) de forme concave, le filament (640) ayant une partie centrale de filament (241) et une pluralité d'extensions de filament (242), la partie centrale de filament (241) ayant un axe central de filament qui coïncide avec l'axe d'allongement (210), dans lequel chaque extension de filament (242) a une longueur d'extension et s'étend à partir de la partie centrale de filament (241) dans un sens d'extension perpendiculaire à l'axe central de filament,
**caractérisé en ce que** la pluralité d'extensions de filament comprend un premier sous-ensemble d'extensions de filament (641) comprenant un premier matériau d'une première couleur et un second sous-ensemble d'extensions de filament (642) comprenant un second matériau d'une seconde couleur, et dans lequel la première couleur est différente de la seconde couleur.

2. Filament (640) selon la revendication 1, dans lequel les extensions de filament (242) sont régulièrement réparties autour de la partie centrale de filament (241).

3. Filament (640) selon l'une quelconque des revendications 1 et 2, dans lequel les extensions de filament (242) sont droites.

4. Filament (640) selon l'une quelconque des revendications 1 à 3, dans lequel la partie centrale de filament (241) a une largeur de partie centrale dans un sens parallèle au sens d'extension, et dans lequel le rapport entre la longueur d'extension et la largeur de partie centrale est égal ou supérieur à 1.

5. Filament (640) selon l'une quelconque des revendications 1 à 4, dans lequel la forme concave est une forme polygonale.

6. Filament (640) selon la revendication 5, dans lequel la forme polygonale est une forme d'étoile ou une forme de croix.

7. Procédé de fabrication d'un objet 3D (910) au moyen d'une modélisation par dépôt en fusion à l'aide d'une imprimante 3D (100), dans lequel le procédé comprend l'étape de dépôt par couches d'un matériau imprimable en 3D pour fournir l'objet 3D (910) comprenant des couches (920) de matériau imprimé en 3D (921), et dans lequel le matériau imprimable en 3D est un filament (640) selon l'une quelconque des revendications 1 à 6.

8. Imprimante 3D (100) permettant d'effectuer le procédé selon la revendication 7, dans laquelle l'imprimante 3D (100) a une tête d'imprimante (110) avec une entrée de filament (111) et une sortie de filament (112), l'entrée de filament (111) étant destinée à recevoir un filament (640) selon l'une quelconque des revendications 1 à 6, dans laquelle l'entrée de filament (111) a une forme concave d'entrée de filament avec une partie centrale d'entrée et une pluralité d'extensions d'entrée, chaque extension d'entrée ayant une longueur d'extension et s'étendant dans un sens s'éloignant de la partie centrale d'entrée, et dans laquelle la sortie de filament (112) a une forme circulaire de sortie de filament.

9. Imprimante 3D (100) selon la revendication 8, dans laquelle la tête d'imprimante (110) a un canal de filament (123) destiné à faire passer un filament (800) selon l'une quelconque des revendications 1 à 6 à travers la tête d'imprimante (110) depuis l'entrée de filament (111) jusqu'à la sortie de filament (122), et dans laquelle le canal de filament (123) est formé de telle sorte que lorsque le filament (800) passe à travers le canal de filament (123), les extensions de filament (842) sont repliées autour de la partie centrale de filament (841).
